# EUROPÄISCHE PATENTANMELDUNG

(11) **EP 0 718 939 A1**
(43) Veröffentlichungstag der Anmeldung: **26.06.1996**
(21) Anmeldenummer: 95115304.8
(22) Anmeldetag: 28.09.1995
(51) Int. Cl.: H02B 1/048, H02B 1/044

(54) **Vorrichtung zum Befestigen eines elektrischen Gerätes an einer Montageplatte**

(30) Priorität: 23.12.1994 DE 4446166
(71) Anmelder: SCHNEIDER ELECTRIC GMBH, D-40880 Ratingen (DE)
(72) Erfinder: Stubbig, Joachim, D-51645 Gummersbach (DE)
(74) Vertreter: Köhne, Friedrich, Dipl.-Ing.

(57) **Zusammenfassung**

Vorrichtungen zum Befestigen eines elektrischen Gerätes, insbesondere Befehls- und / oder Meldegerätes, weisen ein Einsatzgehäuse auf, welches durch eine Bohrung einer Montageplatte bis zu einem Anschlag hindurchschiebbar ist und mit einer aufschraubbaren Mutter versehen ist.

Um eine Vorrichtung zu schaffen, die einfach aufgebaut und herstellbar ist, die im Herstellerwerk als vollständige Einheit mit unverlierbaren Einzelteilen montagefertig zusammensetzbar ist, welche ferner eine Einmannmontage gestattet und welche ferner an alle gängigen Montageplatten unterschiedlicher Dicke befestigbar ist, wird vorgeschlagen, daß das Einsatzgehäuse zwei einander gegenüberliegende achsparallele Führungen aufweist, in welchen je ein Schieber verschiebbar ist, daß jeder Schieber einen federnd schwenkbaren Rasthaken und an dem von der Montageplatte abliegenden Teil ein Außengewinde aufweist, in welches das Innengewinde der Mutter eingreift, und daß der Verschiebeweg der Mutter auf dem Einsatzgehäuse nach außen durch einen Anschlag begrenzt ist.

## Beschreibung

Die Erfindung bezieht sich auf eine Vorrichtung zum Befestigen eines elektrischen Gerätes, insbesondere Befehls- und / oder Meldegerätes, an einer mit einer Bohrung versehenen Montageplatte, mit einem durch die Bohrung bis zu einem Anschlag hindurchschiebbaren Einsatzgehäuse und mit einer aufschraubbaren Mutter.

Es ist herkömmliche Technik, daß elektrische Geräte einzeln oder meist in Reihen neben- und / oder übereinander auf Montageplatten dadurch befestigt werden, daß ein Teil des Gerätes mit den Bedienungs- oder Anzeigeelementen aus der Vorderseite der Montageplatte hervorragt, während der eigentliche Schaltteil des Gerätes mit den elektrischen Anschlüssen und der Verdrahtung auf der Rückseite der Montageplatte angeordnet ist. Die hier angesprochenen Geräte werden in der Fachwelt als Befehls- und Meldegeräte bezeichnet. Hierzu gehören z. B. Leuchtenmelder, Drucktastenschalter, durch Schlüssel betätigbare oder abschließbare Schalter oder auch Nockenschalter, die durch einen Drehgriff betätigbar sind. Montageplatten finden sich üblicherweise in Schaltschränken, sie können aber auch als freistehende Wandplatten oder als Platte eines Schaltpultes ausgebildet sein. Es gibt bereits zahlreiche Konstruktionen zum Befestigen von elektrischen Geräten an derartigen Montageplatten. Normalerweise werden die Geräte durch die Bohrung der Montageplatte hindurchgeführt und dann mit der Montageplatte verschraubt. Dies ist aber sehr aufwendig, umständlich und zeitraubend, weil für diese Arbeiten bei großen Montageplatten zwei Personen erforderlich sind, nämlich eine Person, die das Gerät von der Vorderseite durch die Bohrung der Montageplatte hindurchführt und eine andere Person, die dann auf der Rückseite der Montageplatte die Befestigung vornimmt. Zur Arbeitserleichterung sind daher schon zahlreiche Konstruktionen vorgeschlagen worden, die eine Befestigung der Geräte durch eine Person ermöglichen. Hierzu gehören z. B. Konstruktionen, bei denen das Gerät im wesentlichen aus zwei Teilen besteht, die durch Bajonettverschluß miteinander verbunden werden können. Aber auch diese bekannten Konstruktionen sind sehr bau- und arbeitsaufwendig.

Eine spezielle zu Anfang angegebene Vorrichtung ist aus der EP 0 074 427 B1 bekannt. Bei dieser Vorrichtung ist eine Einmannmontage möglich, indem das Einsatzgehäuse von der Vorderseite der Montageplatte durch die Bohrung hindurchgeführt wird. An dem Einsatzgehäuse sind zwei einander gegenüberliegende nach außen stehende federnde Zungen fest angebracht, die beim Einschieben durch die Bohrung etwas nach innen zusammengedrückt werden und die dann in der richtigen Stellung des Einsatzgehäuses wieder frei nach außen federn und hinter den inneren Rand der Bohrung greifen können, so daß das Einsatzgehäuse nicht mehr aus der Bohrung der Montageplatte herausfallen kann. Von wesentlichem Nachteil ist, daß durch die fest angeordneten federnden Zungen die Dicke der Montageplatte vorgegeben sein muß. In der Praxis haben die Montageplatten aber je nach Größe und Anordnung unterschiedliche Dicken, was bei dem bekannten Einsatzgehäuse entsprechend unterschiedliche Gestaltungen voraussetzt, dies auch deshalb, weil das Einsatzgehäuse auf der Rückseite der Montageplatte ein Außengewinde aufweist, auf welches zur endgültigen Befestigung eine Mutter direkt aufschraubbar ist. Es kommt hinzu, daß das bekannte Einsatzgehäuse im wesentlichen nur Betätigungselemente enthält. Das eigentliche elektrische Gerät muß hierbei noch dazu unter Zwischenschaltung einer Kupplungsplatte in anschließenden Arbeitsvorgängen an dem zuvor fest angebrachten Einsatzgehäuse befestigt und angeschlossen werden. Da die Einzelteile des Gesamtgerätes separat zum Kunden angeliefert werden, können die Montagearbeiten, abgesehen von der Verlierbarkeit einzelner Teile, nur von geschultem Fachpersonal durchgeführt werden. Insgesamt ergibt sich ein großer Herstellungs- und Arbeitsaufwand.

Der Erfindung liegt die Aufgabe zu Grunde, eine Vorrichtung zu schaffen, die einfach aufgebaut und herstellbar ist, die im Herstellerwerk als vollständige Einheit mit unverlierbaren Einzelteilen montagefertig zusammensetzbar ist, welche ferner eine Einmannmontage gestattet und welche ferner an alle gängigen Montageplatten unterschiedlicher Dicke befestigbar ist.

Die gestellte Aufgabe wird erfindungsgemäß dadurch gelöst, daß das Einsatzgehäuse zwei einander gegenüberliegende achsparallele Führungen aufweist, in welchen je ein Schieber verschiebbar ist, daß jeder Schieber einen federnd schwenkbaren Rasthaken und an dem von der Montageplatte abliegenden Teil ein Außengewinde aufweist, in welches das Innengewinde der Mutter eingreift, und daß der Verschiebeweg der Mutter auf dem Einsatzgehäuse nach außen durch einen Anschlag begrenzt ist.

Vorteilhafte Ausgestaltungen der Erfindung ergeben sich aus den Unteransprüchen.

In der Zeichnung ist ein Ausführungsbeispiel der Erfindung im Schema dargestellt, und zwar zeigen
Fig. 1 eine Explosionsdarstellung, wobei die Einzelteile der Vorrichtung mit Abstand übereinander in Perspektive dargestellt sind,
Fig. 2 einen Vertikalschnitt durch die Vorrichtung in zusammengesetztem montagefertigen Zustand und
Fig. 3 im linken Teil die Befestigungsstellung an einer dünnen Montageplatte und im rechten Teil die Befestigungsstellung an einer dicken Montageplatte.

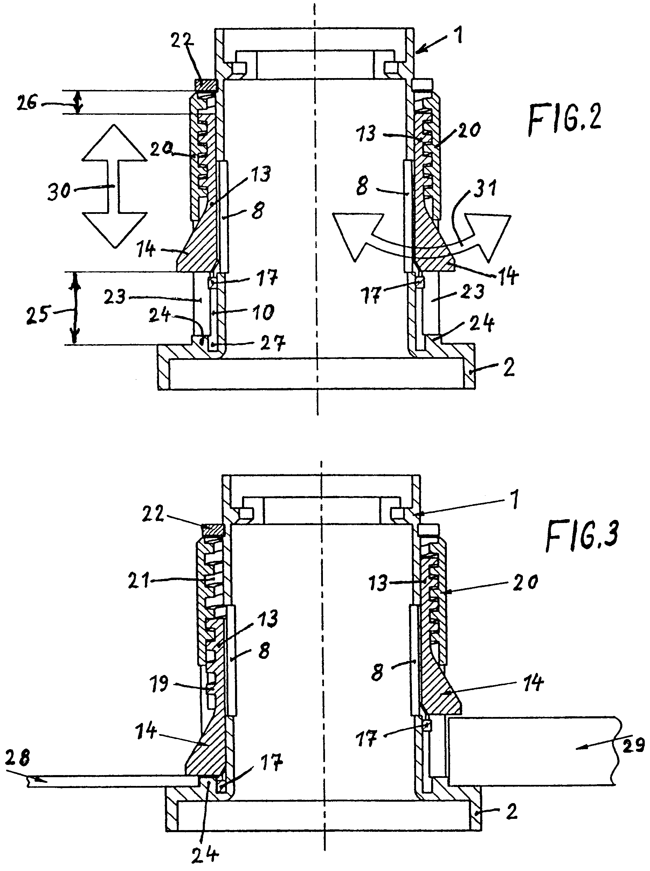

Das in der Zeichnung dargestellte Ausführungsbeispiel der erfindungsgemäßen Vorrichtung weist ein längliches hohl ausgebildetes und im wesentlichen zylindrisches Einsatzgehäuse 1 auf, welches an seinem unteren bzw. äußeren Ende einen Flanschring 2 besitzt, dessen Außendurchmesser größer als der Durchmesser der betreffenden Bohrung in der Montageplatte gewählt ist, so daß der Flanschring in montiertem Zustand der Vorrichtung entsprechend an der Außenfläche der Montageplatte anliegt, wie in der nachfolgend noch näher erläuterten Fig. 3 gezeigt ist. Statt des Flanschringes kann auch ein Flansch mit anderen äußeren Abmessungen, z. B. rechteckig oder quadratisch, vorgesehen werden. An den Flanschring 2 schließt sich ein im wesentlichen zylindrischer Sockel 3 an, dessen Außendurchmesser dem Durchmesser der Bohrung in der Montageplatte entspricht, d. h. mit leichtem Spiel angepaßt ist. Einstückig mit dem Flanschring 2 und dem Sockel 3 schließt sich ein weiteres Gehäuseteil 4 an, dessen Außendurchmesser gegenüber dem Sockel 3 um ein solches Maß verkleinert ist, daß die entsprechend angepaßt und nachfolgend noch näher erläuterte Mutter 20 in vormontiertem Zustand der Vorrichtung durch die Bohrung der Montageplatte hindurchgeschoben werden kann.

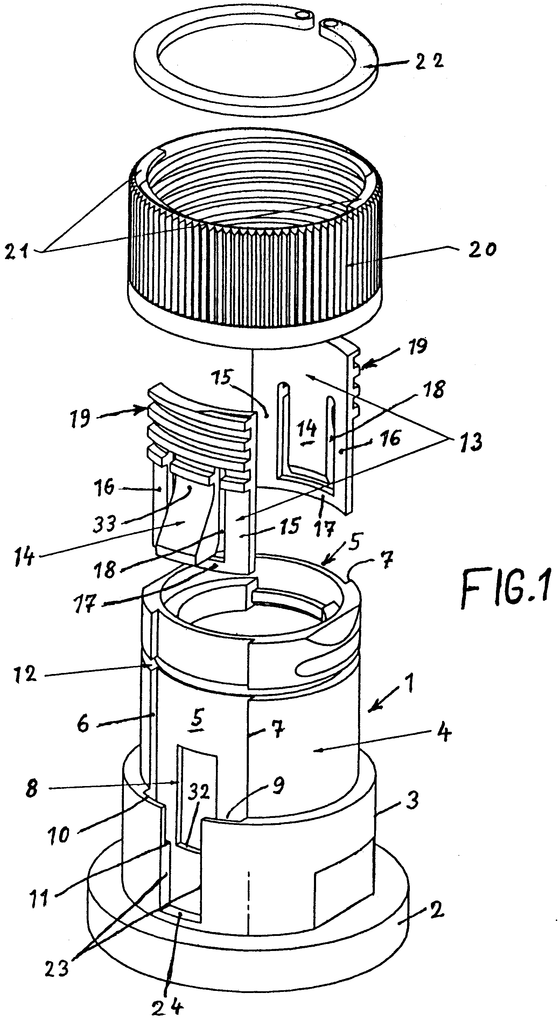

Das Einsatzgehäuse 1 weist zwei einander gegenüberliegende achsparallele Führungen 5 auf, und zwar auf dem Umfang des Einsatzgehäuses 1. Die Führungen 5 sind Vertiefungen in Form von flachen zylindrisch gebogenen Führungsnuten, die durch seitliche Führungskanten 6 und 7 begrenzt sind. Die Führungen 5 dienen zur Aufnahme je eines Schiebers 13. Die Schieber 13 können gemäß der Darstellung in Fig. 1 von oben frei in die Führungen eingeschoben werden. Die Tiefe der Führungen bzw. Führungsnuten 5 ist im wesentlichen der Dicke der Schieber 13 angepaßt.

Jeder Schieber 13 besitzt einen federnd schwenkbaren Rasthaken 14 und an dem von der Montageplatte abliegenden Teil, gemäß Fig. 1 im oberen Teil, ein Außengewinde 19, in welches das Innengewinde 21 der Mutter 20 eingreift, wie nachfolgend noch näher erläutert ist. Der Sockel 3 hat in Verlängerung der Führungen 5 rechteckige Ausnehmungen 23, deren Breite der Breite der Rasthaken 14 angepaßt ist. Zu beiden Seiten der Ausnehmungen 23 sind achsparallele Hinterschneidungen 9 und 10 vorgesehen. Die Hinterschneidungen 9, 10 weisen eine Stufe 11 auf, so daß in die nach der Montageplatte zu liegenden Teile der Hinterschneidungen die zu beiden Seiten der Rasthaken 14 vorgesehenen Schieberteile 15 und 16 dahinter einschiebbar sind. Die von der Montageplatte abliegenden Teile der Hinterschneidungen 9 und 10 sind an die Außenabmessungen der Außengewinde 19 der Schieber 13 angepaßt, so daß je nach Montagezustand zumindest ein Teil der Außengewinde 19 von diesem Teil der Hinterschneidungen aufgenommen werden kann.

In der Wandung des hohl ausgebildeten Einsatzgehäuses 1, und zwar etwa im mittleren Bereich der Führungen 5 sind vorteilhafterweise fensterartige Durchbrüche 8 vorgesehen, durch welche die Rasthaken 14 bei der Montage einwärts schwenkbar sind, wie nachfolgend noch beschrieben ist. Die Durchbrüche 8 sind rechteckig ausgebildet und in der Breite der Breiter der Rasthaken 14 mit Spiel angepaßt. Die Anordnung der Durchbrüche 8 ist zweckmäßig so gewählt, daß die innere Begrenzungskante 32 der Durchbrüche sich etwa im Niveau der Stufen 11 befindet.

Gemäß einer weiteren vorteilhaften Ausgestaltung weisen die Rasthaken 14 in radialen, axialen Ebenen gesehen einen im wesentlichen trapezförmigen, sich nach der Montageplatte zu erweiternden Querschnitt auf. Die Wandstärke am Übergang 33 von dem Rasthaken 14 zu dem übrigen Teil des Schiebers 13 ist so gewählt, daß eine federnde Schwenkbarkeit des Rasthakens 14 gegeben ist, d. h. bei der nachfolgend noch näher beschriebenen Montage kann jeder Rasthaken 14 gegenüber dem Rand der Bohrung in der Montageplatte nach innen schwenken, um anschließend selbsttätig federnd wieder nach außen zu schwenken. Eine stabile Konstruktion des Schiebers ergibt sich dadurch, daß der Schieber 13 von dem Bereich des Außengewindes 19 ausgehend zwei Schenkel 15 und 16 und einen diese miteinander verbindenden Steg 17 aufweist, derart, daß gegenüber dem Rasthaken ein U-förmiger Schlitz 18 gebildet ist.

Da die Außenfläche des Gehäuseteiles 4 im wesentlichen glatt ist, kann die Mutter 20 leicht aufgeschoben werden. Nach der Montage ist der Verschiebeweg der Mutter 20 auf dem Einsatzgehäuse 1 bzw. dem Gehäuseteil 4 durch einen geeigneten Anschlag begrenzt. Dieser Anschlag für die Mutter 20 auf dem Einsatzgehäuse wird vorteilhafterweise durch einen Sicherungsring 22 gebildet, der sich federnd spreizen läßt und welcher in einer außen umlaufenden Fixiernut 12 des Einsatzgehäuses 1 eingesetzt ist, wie die Fig. 2 und 3 zeigen.

Das Innengewinde 21 der Mutter ist vorteilhafterweise zweigängig ausgebildet, und zwar sind die Enden der beiden Gewindegänge, wie Fig. 1 zeigt, um 180^{o} zueinander versetzt. Auf diese Weise ergibt sich der Vorteil, daß die beiden Schieber 13 in gleicher Weise, d. h. formmäßig identisch ausgebildet werden können, woraus sich eine Fertigungsvereinfachung ergibt. Die einander angepaßten Gewinde 19 und 21 sind vorteilhafterweise als Rechtsgewinde und als Rechteck- oder Trapezgewinde ausgebildet.

Die Führungen 5 mit den Hinterschneidungen 9, 10 sowie die Schieber 13 und die Gewinde 19, 21 der Schieber 13 und der Mutter 20 sind in der Gesamtkonstruktion derart aufeinander angepaßt, daß eine wahlweise Montage an Montageplatten 28 oder 29 gemäß Fig. 3 zwischen etwa 1 und 6 mm Dicke ermöglicht ist. Die gängigen auf dem Markt vorhandenen Montageplatten haben eine Dicke, die zwischen diesen beiden Werten liegt.

Am unteren Ende gemäß der zeichnerischen Darstellung kann an der Ausnehmung 23 ein Anschlag 24 vorgesehen sein, dessen Höhe gegenüber der benachbarten Innenfläche des Flanschringes 2 geringer ist als die kleinste Dicke der Montageplatte 28. Der Anschlag 24 bildet gleichzeitig eine Führung für den Steg 17 des Schiebers, wenn dieser sich gemäß dem linken Teil der Fig. 3 in der untersten Stellung befindet, wobei der Steg 17 in den unteren Teil 27 der Hinterschneidung 10 eingreift.

Eine vorteilhafte Ausgestaltung der Erfindung besteht noch darin, daß das hohl ausgebildete Einsatzgehäuse 1 so lang in axialer Richtung bemessen ist, daß mindestens ein wesentlicher des elektrischen Gerätes in seinem Inneren untergebracht ist. Auf diese Weise kann nicht nur die oben beschriebene Vorrichtung innerhalb des Herstellerwerkes als kompakte Einheit montagefertig vorbereitet werden, sondern auch noch in Bezug auf das jeweilige elektrische Gerät, welches letztlich an der Montageplatte zu befestigen ist. Das schließt allerdings nicht aus, daß auch die Möglichkeit besteht, an dem inneren Ende, also an dem von der Montageplatte abliegenden Ende des Einsatzgehäuses Geräteerweiterungen bzw. Verlängerungen des elektrischen Gerätes anzuschließen, was beispielsweise bei Nockenschaltern häufig der Fall bzw. erforderlich ist.

Die Montage und die Wirkungsweise der oben erläuterten Vorrichtung sind im wesentlichen folgende.

Zur Montagevorbereitung können im Herstellerwerk zunächst die beiden Schieber 13 in die seitlichen Führungen 5 bzw.

Führungsnuten des Einsatzgehäuses 1 eingelegt werden. Sie werden dann in achsparalleler Richtung bis zum Anschlag in den Hinterschneidungen 9, 10 eingeschoben. Sodann wird die Mutter 20 über das im wesentlichen zylindrische Gehäuseteil 4 des Einsatzgehäuses 1 geschoben und gegen den Uhrzeigersinn gedreht, bis sich die Schieber 13 und die Mutter 20 mit den Gewinden im Eingriff befinden und sich die Schieber 13 bewegen. Sodann wird der Sicherungsring 22 in die Fixiernut 12 eingelegt, was durch leichtes Spreizen des an einer Stelle geteilten Sicherungsringes 22 erfolgen kann. Durch Federwirkung hält sich der Sicherungsring dann in der Fixiernut 12. Auf diese Weise wird ein Zurückrutschen der Mutter 20 verhindert. Danach wird die Mutter 20 durch Drehen gegen den Uhrzeigersinn solange gedreht, bis die Rasthaken 14 in Höhe der Durchbrüche 8 liegen. Dies ist der montagefertige Zustand, in welchem die Vorrichtung dem Handel und letztlich dem Verbraucher bzw. Anwender angeliefert wird. Alle Teile bilden eine Einheit und sind unverlierbar zusammengehalten. Zur Montage der Vorrichtung an der Montageplatte wird die Vorrichtung in diesem für die Montage vorbereiteten Zustand von der Vorderseite durch das Befestigungsloch in der Montageplatte gesteckt. Die beiderseitigen Rasthaken 14, die über den Lochdurchmesser überstehen, können beim Einschieben der Vorrichtung federnd nach innen schwenken, und zwar durch die Durchbrüche 8. Die Vorrichtung wird sodann bis zum Anschlag durch das Loch geschoben bis die Rasthaken 14 wieder nach außen ausfedern. Damit ist zunächst die Selbsthaltung der Vorrichtung gewährleistet. Wenn der Handwerker eine Montageplatte auf diese Weise ggf. mit einer größeren Anzahl von Vorrichtungen und elektrischen Geräten bestückt hat, kann er auf die Rückseite der Montageplatte gehen und dort die endgültige Befestigung vornehmen. Dies geschieht durch Drehen der Mutter 20 im Uhrzeigersinn, so daß durch die Wirkung der Gewinde 19 und 21 die Schieber in Richtung auf die Rückseite der Montageplatte geschoben und letztlich gegen die Montageplatte gepreßt werden. Da die Schieber 13 in Richtung des Pfeiles 30 (Fig. 2) einen verhältnismäßig großen Verschiebeweg 25 haben, kann die Befestigung an unterschiedlich dicke Montageplatten 28 oder 29 gemäß Fig. 3 vorgenommen werden, so daß in jedem Falle eine kraftschlüssige Verbindung erfolgt und die Vorrichtung fixiert ist. Zur Demontage der Vorrichtung wird die Mutter 20 entgegen dem Uhrzeigersinn gedreht bis die Rasthaken 14 der Schieber 13 wieder in Höhe der Durchbrüche 8 liegen. Durch Weiterdrehen der Mutter über das Abstandsmaß 26 hinaus, und zwar gegen den Uhrzeigersinn, werden die Rasthaken 14 zwangsweise nach innen durch die Durchbrüche 8 zurückgeschwenkt. Die Schwenkbewegung der Rasthaken ist in Fig. 2 durch Pfeil 31 verdeutlicht. In diesem Zustand kann die Vorrichtung dann nach der Vorderseite der Montageplatte aus dem Loch herausgezogen werden.

## Patentansprüche

1. Vorrichtung zum Befestigen eines elektrischen Gerätes, insbesondere Befehls- und / oder Meldegerätes, an einer mit einer Bohrung versehenen Montageplatte (28, 29), mit einem durch die Bohrung bis zu einem Anschlag (2) hindurchschiebbaren Einsatzgehäuse (1) und mit einer aufschraubbaren Mutter (20), dadurch gekennzeichnet, daß das Einsatzgehäuse (1) zwei einander gegenüberliegende achsparallele Führungen (5) aufweist, in welchen je ein Schieber (13) verschiebbar ist, daß jeder Schieber (13) einen federnd schwenkbaren Rasthaken (14) und an dem von der Montageplatte (28, 29) abliegenden Teil ein Außengewinde (19) aufweist, in welches das Innengewinde (21) der Mutter (20) eingreift, und daß der Verschiebeweg der Mutter (20) auf dem Einsatzgehäuse (1) nach außen durch einen Anschlag (22) begrenzt ist.

2. Vorrichtung nach Anspruch 1, dadurch gekennzeichnet, daß die achsparallelen Führungen (5) für die Schieber (13) auf dem Umfang des Einsatzgehäuses (1) im wesentlichen der Dicke der Schieber (13) entsprechende Vertiefungen (5) in Form von flachen Führungsnuten aufweisen, die durch seitliche Führungskanten (6, 7) begrenzt sind.

3. Vorrichtung nach Anspruch 1 oder 2, dadurch gekennzeichnet, daß das Einsatzgehäuse (1) nach der Montageplatte (28, 29) zu einen im Durchmesser gegenüber dem übrigen Teil des Einsatzgehäuses vergrößerten Sockel (3) aufweist, der dem Durchmesser der Bohrung der Montageplatte (28, 29) entspricht, daß der Sockel (3) in Verlängerung der Führungen (5) rechteckige Ausnehmungen (23) aufweist, deren Breite der Breite der Rasthaken (14) angepaßt ist, und daß zu beiden Seiten der Ausnehmungen (23) achsparallele Hinterschneidungen (9, 10) vorgesehen sind.

4. Vorrichtung nach Anspruch 3, dadurch gekennzeichnet, daß die Hinterschneidungen (9, 10) eine Stufe (11) aufweisen, so daß in die nach der Montageplatte (28, 29) zu liegenden Teile der Hinterschneidungen die zu beiden Seiten der Rasthaken (14) vorgesehenen Schieberteile (15, 16) einschiebbar sind und die von der Montageplatte (28, 29) abliegenden Teile der Hinterschneidungen (9, 10) an die Außenabmessungen der Außengewinde (19) der Schieber (13) angepaßt sind.

5. Vorrichtung nach einem der vorhergehenden Ansprüche, dadurch gekennzeichnet, daß in der Wandung des hohl ausgebildeten Einsatzgehäuses (1) fensterartige Durchbrüche (8) vorgesehen sind, durch welche die Rasthaken (14) bei der Montage einwärts schwenkbar sind.

6. Vorrichtung nach Anspruch 5, dadurch gekennzeichnet, daß die Durchbrüche (8) rechteckig ausgebildet und in der Breite der Breite der Rasthaken (14) angepaßt sind, und daß die innere Begrenzungskante (32) der Durchbrüche (8) sich etwa im Niveau der Stufen (11) befindet.

7. Vorrichtung nach einem der vorhergehenden Ansprüche, dadurch gekennzeichnet, daß die Rasthaken (14) in radialen, axialen Ebenen gesehen einen im wesentlichen trapezförmigen, sich nach der Montageplatte (28, 29) zu erweiternden Querschnitt aufweisen.

8. Vorrichtung nach Anspruch 7, dadurch gekennzeichnet, daß die Wandstärke am Übergang (33) von dem Rasthaken (14) zu dem übrigen Teil des Schiebers (13) so gewählt ist, daß eine federnde Schwenkbarkeit des Rasthakens (14) gegeben ist.

9. Vorrichtung nach einem der vorhergehenden Ansprüche, dadurch gekennzeichnet, daß der Schieber (13) von dem Bereich des Außengewindes (19) ausgehend zwei Schenkel (15, 16) und einen diese miteinander verbindenden Steg (17) aufweist, derart, daß gegenüber dem Rasthaken ein U-förmiger Schlitz (18) gebildet ist.

10. Vorrichtung nach einem der vorhergehenden Ansprüche, dadurch gekennzeichnet, daß der Anschlag für die Mutter (20) auf dem Einsatzgehäuse (1) durch einen Sicherungsring (22) gebildet ist, welcher in einer außen umlaufenden Fixiernut (12) des Einsatzgehäuses (1) eingesetzt ist.

11. Vorrichtung nach einem der vorhergehenden Ansprüche, dadurch gekennzeichnet, daß das Innengewinde (21) der Mutter (20) derart zweigängig ausgebildet ist, daß die beiden Schieber (13) in gleicher Weise ausgebildet sind.

12. Vorrichtung nach einem der vorhergehenden Ansprüche, dadurch gekennzeichnet, daß die Gewinde (19, 21) als Rechtsgewinde und als Rechteck- oder Trapezgewinde ausgebildet sind.

13. Vorrichtung nach einem der vorhergehenden Ansprüche, dadurch gekennzeichnet, daß die Führungen (5), die Schieber (13) und die Gewinde (19, 21) der Schieber (13) und der Mutter (20) derart aufeinander angepaßt sind, daß eine wahlweise Montage an Montageplatten (28, 29) zwischen 1 und 6 mm Dicke ermöglicht ist.

14. Vorrichtung nach einem der vorhergehenden Ansprüche, dadurch gekennzeichnet, daß das hohl ausgebildete Einsatzgehäuse (1) so lang bemessen ist, daß mindestens ein wesentlicher Teil des elektrischen Gerätes in seinem Inneren untergebracht ist.
